# EUROPÄISCHE PATENTSCHRIFT

(11) **EP 2 618 226 B1**
(45) Veröffentlichungstag und Bekanntmachung des Hinweises auf die Patenterteilung: **13.08.2014**
(21) Anmeldenummer: 12151730.4
(22) Anmeldetag: 19.01.2012
(51) Int. Cl.: G06F 21/31, G05B 19/042, G06F 21/32

(54) **Industrielles Automatisierungssystem und Verfahren zu dessen Absicherung**
Industrial automation system and method for its protection
Système d'automatisation industriel et son procédé de protection

(43) Veröffentlichungstag der Anmeldung: 24.07.2013
(73) Patentinhaber: Siemens Aktiengesellschaft, 80333 München (DE)
(72) Erfinder: Akil, Yahya, 76185 Karlsruhe (DE); Müller, Jörg, 76351 Linkenheim (DE)

(56) Entgegenhaltungen:
- WO-A1-2008/022606
- US-B1- 7 314 169

## Beschreibung

Die Erfindung betrifft ein industrielles Automatisierungssystem und ein Verfahren zu dessen Absicherung.

Industrielle Automatisierungssysteme umfassen eine Vielzahl an Rechnern zur Steuerung von Maschinen, Sensoren, usw. Industrielle Automatisierungssysteme sind in der Regel aus Sicherheitsgründen in sich geschlossene Systeme, d.h. die Einbindung weiterer Komponenten (wie z.B. Maschinen, Geräte, Rechner zur Steuerung und Aktualisierung bestehender Komponenten des Systems, usw.) ist daher oftmals mit Sicherheitsproblemen verbunden. Zum Teil sind in Automatisierungssystemen auch solche Geräte implementiert, welche Sicherheitsprotokolle oder Authentifizierungsprotokolle des Automatisierungssystems nicht unterstützen. Solche Geräte sind potentiell unsicher und bilden eine mögliche Schwachstelle für Angreifer.

Ein Beispiel für ein solches unsicheres Gerät eines Automatisierungssystems ist eine Komponente mit einer Schnittstelle für ein anderes, externes Gerät, das an das Automatisierungssystem angeschlossen werden soll. Die Komponente kann z.B. ein Switch oder eine Bridge sein. Deren Schnittstellen basieren meist auf dem Protokoll Ethernet. Das die Schnittstelle für das externe Gerät aufweisende Gerät kann wahlweise drahtlos oder drahtgebunden mit weiteren Komponenten des Automatisierungssystems verbunden sein.

Ein weiteres Beispiel für unsichere Geräte sind Komponenten, welche keine Fähigkeit besitzen, Sicherheitsprotokolle zu unterstützen. Wird an solche Geräte ein anderes, externes Gerät, wie z.B. ein Rechner, über die Schnittstelle angeschlossen, so ist bereits ein Zugang zu sämtlichen Komponenten des Automatisierungssystems möglich, da keine weiteren Sicherheitsmechanismen vorgesehen sind. Hierdurch ist es einem Angreifer möglich, beispielsweise Konfigurationsdaten und dergleichen auszuspionieren.

Eine Möglichkeit, einen unkontrollierten Zugriff auf die Komponenten des Automatisierungssystems zu unterbinden, besteht darin, einen dedizierten Port für ein unsicheres Gerät zur Verfügung zu stellen. Weiterhin kann ein Gateway zwischen dem unsicheren Gerät und den Komponenten des Automatisierungssystems vorgesehen sein, wobei das Gateway dann einen Port für das unsichere Gerät bereitstellt. Beide Lösungen führen jedoch zu dem Problem, dass ein offener, ungesicherter Port bereitgestellt werden muss, an den das unsichere Gerät anzuschließen ist.

Aus der US 7,314,169 B1 ist zur Erhöhung der Sicherheit eines Automatisierungssystems bekannt, für ein an das Automatisierungssystem anzuschließendes Gerät ein Zugangsticket oder eine andere geeignete Datenstruktur durch eine zentrale Einheit erstellen zu lassen, wobei das Zugangsticket zumindest teilweise auf einem Identitätsmerkmal der nachfragenden Einheit basiert. Dabei werden in einem Zugangsticket jeder nachfragenden Einheit Zugangsrechte zugewiesen. Ein Nachteil dieser Vorgehensweise besteht darin, dass ein hoher Administrationsaufwand erforderlich ist.

Es ist Aufgabe der vorliegenden Erfindung, ein industrielles Automatisierungssystem und ein Verfahren zu dessen Absicherung anzugeben, bei denen eine hohe Sicherheit mit geringem Administrationsaufwand bereitgestellt werden kann.

Diese Aufgaben werden gelöst durch ein industrielles Automatisierungssystem gemäß den Merkmalen des Patentanspruchs 1 und ein Verfahren zu dessen Absicherung gemäß den Merkmalen des Patentanspruchs 8. Vorteilhafte Ausgestaltungen sind in den abhängigen Patentansprüchen enthalten.

Die Erfindung schafft ein industrielles Automatisierungssystem, das einen digitalen Fingerabdruck umfasst, der einer den Zugang zu dem Automatisierungssystem nachfragenden Einheit zugewiesen ist und auf einem oder mehreren Parametern einer Kommunikation der Einheit mit einer den Fingerabdruck ermittelnden Komponente des Automatisierungssystems basiert. Das Automatisierungssystem umfasst weiter die den Fingerabdruck ermittelnde Komponente, welche im Betrieb des Automatisierungssystems der nachfragenden Einheit den Zugang zu dem Automatisierungssystem gewährt und den ermittelten Fingerabdruck der nachfragenden Einheit mit einem gespeicherten Fingerabdruck vergleicht.

Bei dem erfindungsgemäßen Verfahren zum Absichern des industriellen Automatisierungssystems wird einer den Zugang zu dem Automatisierungssystem nachfragenden Einheit ein Fingerabdruck zugewiesen. Der Fingerabdruck wird, basierend auf einem oder mehreren Parametern einer Kommunikation der Einheit mit einer den Fingerabdruck ermittelnden Komponente des Automatisierungssystems ermittelt. Die diesen Fingerabdruck ermittelnde Komponente vergleicht den Fingerabdruck mit einem gespeicherten Fingerabdruck und gewährt nur bei einem positiven Vergleich den Zugang zu dem Automatisierungssystem.

Die den Fingerabdruck ermittelnde Komponente stellt ein Gateway für die nachfragende Einheit zum Anschluss an das industrielle Automatisierungssystem dar. Dadurch, dass die den Fingerabdruck ermittelnde Komponente einen Fingerabdruck der nachfragenden Einheit ermittelt, kann auf einfache Weise ein automatisierter Zugangsschutz zu dem Automatisierungssystem bereitgestellt werden. Das Automatisierungssystem wird gegen verschiedene Arten von Angriffen, wie z.B. aktive Angriffe, Angriffe von innerhalb des Automatisierungssystems, Spoofing, Close-in- oder Hijack-Angriffe geschützt. Auch ein offener Port, an den die nachfragende Einheit angeschlossen ist oder wird, kann nicht benutzt werden, um auf andere Komponenten des Automatisierungssystems zuzugreifen, ohne dass eine vorherige Verifizierung und Überprüfung der nachfragenden Einheit anhand des digitalen Fingerabdrucks erfolgte. Insbesondere ist es durch die Erfindung möglich, auch solche nachfragenden Einheiten an das Automatisierungssystem anzuschließen, welche ansonsten keine Unterstützung für autorisierte Protokolle aufweisen.

In einer ersten zweckmäßigen Ausgestaltung des erfindungsgemäßen Automatisierungssystems ist die den Fingerabdruck ermittelnde Komponente ein Endknoten des Automatisierungssystems, an den die nachfragende Einheit zum Austausch von Daten über eine vorgegebene Schnittstelle, insbesondere gemäß dem Protokoll Ethernet, anschließbar ist. Bei der den Fingerabdruck ermittelnde Komponente kann es sich beispielsweise um eine Bridge oder einen Switch handeln, welcher mindestens eine Schnittstelle für den Anschluss der nachfragenden Einheit aufweist. Im Umfeld von Automatisierungssystemen wird dabei üblicherweise auf Anschlüsse gemäß Ethernet zurückgegriffen, da dies ein sehr weit verbreiteter Standard ist. Damit ist es nicht nur möglich, spezifische Geräte oder Maschinen eines Automatisierungssystems anzuschließen, sondern auch einen Rechner, welcher beispielsweise für Konfigurations- oder Steuerungsaufgaben von anderen Komponenten des Automatisierungssystems eingesetzt werden soll.

Gemäß einer weiteren Ausgestaltung des Automatisierungssystems authentifiziert die den Fingerabdruck ermittelnde Komponente sich für den Austausch von Daten mit anderen Komponenten des Automatisierungssystems zumindest einmalig gegenüber dem Automatisierungssystem. Die diesen Fingerabdruck ermittelnde Komponente stellt damit eine sichere Komponente des Automatisierungssystems dar, welche über sämtliche sicherheitsrelevanten Protokolle und Mechanismen verfügt. Die Komponente selbst übernimmt, wie erläutert, die Aufgabe, den Fingerabdruck der nachfragenden Einheit zu ermitteln und mit einem gespeicherten Fingerabdruck zu vergleichen, um lediglich autorisierten Einheiten den Zugang zu dem Automatisierungssystem zu ermöglichen.

In einer weiteren zweckmäßigen Ausgestaltung ist die den Fingerabdruck ermittelnde Komponente drahtlos oder drahtgebunden zum Austausch von Daten mit anderen Komponenten des Automatisierungssystems verbunden. Insbesondere bei drahtlos mit dem Automatisierungssystem kommunikativ verbundenen Komponenten besteht die Gefahr, dass diese für Angriffszwecke missbraucht werden. Daher stellt bei solchen Komponenten der vorgeschlagene Zugangsschutz eine besonders effektive Maßnahme gegen Missbrauch dar.

Gemäß einer weiteren zweckmäßigen Ausgestaltung ist der initial ermittelte Fingerabdruck einer der nachfragenden Einheiten in der Komponente oder einem Speicher des Automatisierungssystems, auf den die Komponente zugreifen kann, gespeichert. Der im Rahmen der Überprüfung vorgenommene Vergleich erfolgt damit zwischen dem ermittelten Fingerabdruck und dem in dem Speicher hinterlegten Fingerabdruck.

Insbesondere ist der gespeicherte Fingerabdruck einem eindeutigen Kennzeichner der nachfragenden Einheit, insbesondere einer MAC-Adresse, zugewiesen. Der gespeicherte Fingerabdruck kann dabei wahlweise die MAC-Adresse umfassen oder auch nicht. Im ersten Fall ist der Fingerabdruck eindeutig einer bestimmten nachfragenden Einheit zugewiesen. Ist die MAC-Adresse nicht Bestandteil des Fingerabdrucks, so ist der Fingerabdruck für einen bestimmten Maschinentyp oder eine Klasse von Geräten gültig.

In einer weiteren zweckmäßigen Ausgestaltung ist der Fingerabdruck aus einer konfigurierbaren Teilanzahl an Parametern einer Gesamtanzahl an Parametern der Kommunikation der Einheit gebildet. Je mehr Parameter in dem Fingerabdruck verarbeitet werden, desto eindeutiger und sicherer kann eine bestimmte nachfragende Einheit verifiziert werden. Es kann jedoch zweckmäßig sein, die Auswahl der Parameter aus einer Gesamtanzahl an Parametern einem Administrator des Automatisierungssystems zu überlassen, um spezifische Eigenheiten eines Automatisierungssystems zu berücksichtigen. Darüber hinaus ist es bei einer konfigurierbaren Teilanzahl möglich, nachfragende Einheiten zu clustern, beispielsweise nach Gerätetyp, Hersteller, usw.

In einer Ausgestaltung des erfindungsgemäßen Verfahrens tauscht die den Fingerabdruck ermittelnde Einheit zumindest nach der erstmaligen Herstellung einer Kommunikationsverbindung zu der nachfragenden Komponente vorgegebene oder beliebige Daten im Rahmen einer Kommunikation mit der nachfragenden Komponente aus und ermittelt, basierend auf der Kommunikation, den Fingerabdruck und speichert diesen in der Komponente oder einem Speicher des Automatisierungssystems, auf den die Komponente zugreifen kann.

In einer weiteren Ausgestaltung wird nach der Herstellung einer Kommunikationsverbindung der nachfragenden Komponente zu der den Fingerabdruck ermittelnden Einheit der Fingerabdruck der Komponente ermittelt und überprüft, ob dieser gespeichert ist, wobei im negativen Fall (d.h. der Fingerabdruck wurde nicht im Speicher gefunden) überprüft wird, ob an einer Mensch-Maschine-Schnittstelle eine positive Bestätigung des ermittelten Fingerabdrucks ermittelt werden kann, und nur bei vorliegender positiver Bestätigung ein Speichern des Fingerabdrucks sowie die Gewährung des Zugangs zu dem Automatisierungssystem erfolgt. Die initiale Ermittlung des Fingerabdrucks ist notwendig, um diesen als Referenz in dem Speicher des Automatisierungssystems oder der den Fingerabdruck ermittelnden Komponente vorhalten zu können. Um hierbei sicherzustellen, dass bei der initialen Ermittlung und Speicherung kein Missbrauch betrieben werden kann, ist zusätzlich eine Bestätigung über eine Mensch-Maschine-Schnittstelle erforderlich. Eine solche Bestätigung kann beispielsweise durch einen Administrator des Automatisierungssystems erfolgen, der mit seiner Eingabe bestätigt, dass die an das Automatisierungssystem bzw. die Einheit angeschlossene Komponente später berechtigterweise auf das Automatisierungssystem zugreifen können soll. Die Mensch-Maschine-Schnittstelle kann hierzu gesonderten Sicherheitsmechanismen unterworfen sein, wie z.B. der Eingabe eines erforderlichen Passworts, damit sich der Administrator gegenüber dem Automatisierungssystem authentifizieren kann.

In einer weiteren Ausgestaltung erfolgen die Ermittlung des Fingerabdrucks der an die Einheit angeschlossenen Komponenten und der Vergleich mit dem für die Komponente gespeicherten Fingerabdruck in vorgegebenen zeitlichen Abständen und/oder bei Vorliegen bestimmter Ereignisse durch die Einheit. Der Fingerabdruck wird somit nicht nur beim initialen Verbinden der Komponente mit dem Automatisierungssystem zur Überprüfung herangezogen. Stattdessen kann durch die wiederholte Ermittlung des Fingerabdrucks und den Vergleich mit dem gespeicherten Fingerabdruck auch im laufenden Betrieb sichergestellt werden, dass die Komponente bezüglich eines Zugriffs auf das Automatisierungssystem berechtigt ist und nicht ausgetauscht wurde.

Zweckmäßigerweise wird ferner zur Ermittlung des Fingerabdrucks eine Gesamtanzahl an Parametern der Kommunikation ermittelt, wobei der Fingerabdruck aus einer konfigurierbaren Teilanzahl an Parametern der Gesamtanzahl an Parametern der Kommunikation der Einheit gebildet wird. Es versteht sich, dass der Fingerabdruck auch aus allen Parametern, einschließlich einer MAC-Adresse, der nachfragenden Komponente gebildet werden kann.

Die Gesamtanzahl an Parametern umfasst zweckmäßigerweise Folgendes:
- ein von der Komponente für die Kommunikation mit der Einheit verwendetes Protokoll;
- die von der Komponente für die Kommunikation verwendeten Ports der Einheit;
- die von der Komponente im Rahmen der Kommunikation angefragten Adressen;
- die Länge der von der Komponente erzeugten Datenrahmen;
- eine Zeitdauer zwischen dem aufeinanderfolgenden Senden zweier Datenrahmen;
- eine MAC-Adresse der nachfragenden Komponente.

Es versteht sich, dass prinzipiell alle die Kommunikation charakterisierenden Parameter bzw. Eigenschaften der Kommunikation verwendet werden können, um den Fingerabdruck der nachfragenden Komponente zu bestimmen. Ebenso ist für einen Fachmann aus der vorangegangenen Beschreibung ersichtlich, dass nicht alle der aufgeführten Parameter zur Ermittlung des Fingerabdrucks verwendet werden müssen, sondern auch eine kleinere Teilauswahl ausreicht.

Es ist weiterhin zweckmäßig, wenn die den Fingerabdruck ermittelnde Komponente sich für den Austausch von Daten mit anderen Komponenten des Automatisierungssystems zumindest einmalig gegenüber dem Automatisierungssystem authentifiziert.

Die Erfindung wird nachfolgend näher anhand eines Ausführungsbeispiels beschrieben. Es zeigen:

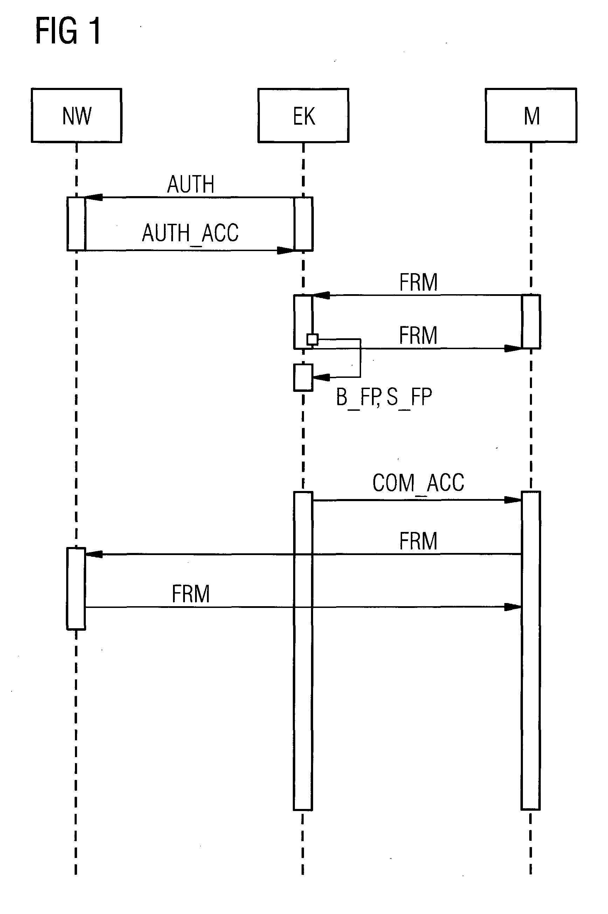

- Fig. 1: eine schematische Darstellung des Kommunikationsablaufs in einem erfindungsgemäßen industriellen Automatisierungssystem, an das eine nachfragende Einheit angeschlossen werden soll, und
- Fig. 2: eine schematische Darstellung des Kommunikationsablaufs in dem erfindungsgemäßen industriellen Automatisierungssystem während des regulären Betriebs des Automatisierungssystems.

Im Rahmen der nachfolgend beschriebenen Kommunikation zur Absicherung eines industriellen Automatisierungssystems sind im Wesentlichen drei Komponenten beteiligt. Eine nachfragende Einheit ist mit dem Bezugszeichen M gekennzeichnet. Die nachfragende Einheit M kann beispielsweise ein Rechner, z.B. zur Konfiguration oder Aktualisierung von Komponenten des Automatisierungssystems, oder eine an das Automatisierungssystem anzuschließende Maschine oder ein Gerät sein. Mit dem Bezugszeichen EK, ist ein Endknoten des Automatisierungssystems gekennzeichnet. Bei dem Endknoten kann es sich beispielsweise um eine Bridge oder einen Router handeln, an den die nachfragende Einheit M, vorzugsweise über einen Ethernet-Anschluss der Endkomponente EK angeschlossen werden kann. Mit NW sind weitere Komponenten des Automatisierungssystems gekennzeichnet, wobei NW eine Vielzahl an einzelnen unterschiedlichen Komponenten repräsentieren kann, die in geeigneter Weise zum Austausch von Daten miteinander verbunden sind. Die Kommunikation zwischen dem Endknoten EK und den weiteren Komponenten NW des Automatisierungssystems kann wahlweise drahtgebunden oder drahtlos erfolgen.

In der nachfolgenden Beschreibung wird NW auch als das Automatisierungsnetzwerk selbst bezeichnet. Diese Formulierung ist synonym zu den Komponenten des Automatisierungsnetzwerks zu verstehen.

In einem ersten Schritt erfolgt eine Authentifizierung des Endknotens EK gegenüber den restlichen Komponenten des Automatisierungsnetzwerks NW. Zunächst überträgt der Endknoten EK eine Authentifizierungsanfrage AUTH, welche durch das Automatisierungssystem NW verarbeitet wird und mit einer Authentifizierungsantwort AUTH_ACC beantwortet wird. Im Rahmen der Authentifizierung kann beispielsweise ein dem Endknoten EK bekanntes Geheimnis des Automatisierungsnetzwerks NW ausgetauscht werden. Die Authentifizierung kann beispielsweise im Rahmen eines Challenge-Response-Verfahrens oder mittels anderer geeigneter Authentifizierungsverfahren erfolgen. Nach erfolgter, positiver Authentifizierung ist der Endknoten EK in der Lage, mit dem Automatisierungssystem NW zu kommunizieren. Die Kommunikation kann gesichert, z.B. unter Verwednung spezieller Protokolle, erfolgen.

Im Weiteren wird nun davon ausgegangen, dass ein Gerät (nachfragende Einheit) M Zugang bzw. Zugriff auf das Automatisierungsnetzwerk NW erhalten möchte. Der Anschluss erfolgt, wie erläutert, über einen Ethernet-Anschluss des Endknotens EK. Sobald das Gerät M an den Endknoten EK angeschlossen ist, erfolgt eine Kommunikation zwischen dem Gerät M und dem Endknoten EK. Im Rahmen der Kommunikation werden Frames FRM zwischen dem Gerät M und dem Endknoten EK ausgetauscht. Dabei analysiert der Endknoten EK die Art der Kommunikation des Geräts M. Beispielsweise stellt der Endknoten EK fest, mit welchem Protokoll das Gerät M kommuniziert. Weiterhin wird z.B. überprüft, welche Ports von dem Gerät M bei der Kommunikation mit dem Endknoten EK verwendet werden. Es kann überprüft werden, welche Adressen von dem Gerät M im Rahmen der Kommunikation angefragt werden. Ein weiteres die Kommunikation beschreibendes Merkmal betrifft die Länge der von der Komponente erzeugten Datenrahmen FRM sowie die Zeitdauer zwischen dem aufeinanderfolgenden Senden zwischen zwei Datenrahmen. Ebenso wird die MAC-Adresse des Geräts M durch den Endknoten EK erfasst. Darüber hinaus können weitere Aspekte der Kommunikation aus der Kommunikation extrahiert werden. Aus allen oder einem Teil dieser Parameter bildet der Endknoten EK einen Fingerabdruck (B FP), den der Endknoten EK speichert (S FP). Hierzu kann innerhalb des Endknotens EK ein eigener Speicher vorgesehen sein. Ebenso kann ein Speicher des Automatisierungssystems NW genutzt werden, auf welchen der Endknoten EK kommunikativ zugreifen kann.

Um sicherzustellen, dass lediglich solche Fingerabdrücke von Geräten M gespeichert werden, die später tatsächlich berechtigt sein sollen, auf das Netzwerk des Automatisierungssystems NW zuzugreifen, kann die Echtheit eines Geräts M, z.B. durch einen Administrator des Automatisierungssystems bestätigt werden. Beispielsweise kann die zwischen dem Gerät M und dem Endknoten EK vorzunehmende Verbindung durch den Administrator vorgenommen werden und eine entsprechende Bestätigung über eine Mensch-Maschine-Schnittstelle, welche durch den Endknoten EK ausgelesen wird, vorgenommen werden. Hierzu ist es zweckmäßig, wenn sich der Administrator des Automatisierungssystems gegenüber dem Automatisierungssystem NW oder dem Endknoten EK seinerseits authentifiziert.

Sobald ein Fingerabdruck eines Geräts M gespeichert ist, wird dem angeschlossenen Gerät M durch den Endknoten EK eine Nachricht COM_ACC übermittelt, dass nunmehr eine Kommunikation mit dem Automatisierungssystem NW gestattet ist. Im Folgenden kann das Gerät M mit dem Automatisierungssystem NW Datenrahmen FRM austauschen.

Beim Speichern eines Fingerabdrucks wird dieser vorzugsweise einer MAC-Adresse, d.h. einem eineindeutigen Kennzeichner des Geräts M, zugewiesen. Der Fingerabdruck selbst kann seinerseits wiederum die MAC-Adresse umfassen, so dass der Fingerabdruck eindeutig für ein jeweiliges Gerät ist. Ebenso kann die MAC-Adresse auch kein Bestandteil des Fingerabdrucks sein, so dass ein Fingerabdruck für eine Klasse von Maschinen, einen bestimmten Gerätetyp und dergleichen gültig ist. Dies hat dann zur Folge, dass eine baugleiche Maschine, die identische Kommunikationseigenschaften wie diejenige Maschine aufweist, die an den Endknoten während der erstmaligen Ermittlung und Speicherung des Fingerabdrucks angeschlossen war, ebenfalls Zugang zu dem Automatisierungssystem erhalten kann. Dies kann beispielsweise dann von Vorteil sein, wenn aufgrund eines Defekts ein Gerät durch ein baugleiches Gerät zu ersetzen ist.

Prinzipiell ist es zweckmäßig, zunächst alle ermittelten Parameter, die zur Bildung eines Fingerabdrucks herangezogen werden könnten, zu speichern. Welche der Parameter dann für die Ermittlung des Fingerabdrucks verwendet werden, kann beispielsweise durch einen Administrator des Automatisierungssystems NW oder eine vorgegebene Konfigurationsdatei festgelegt werden.

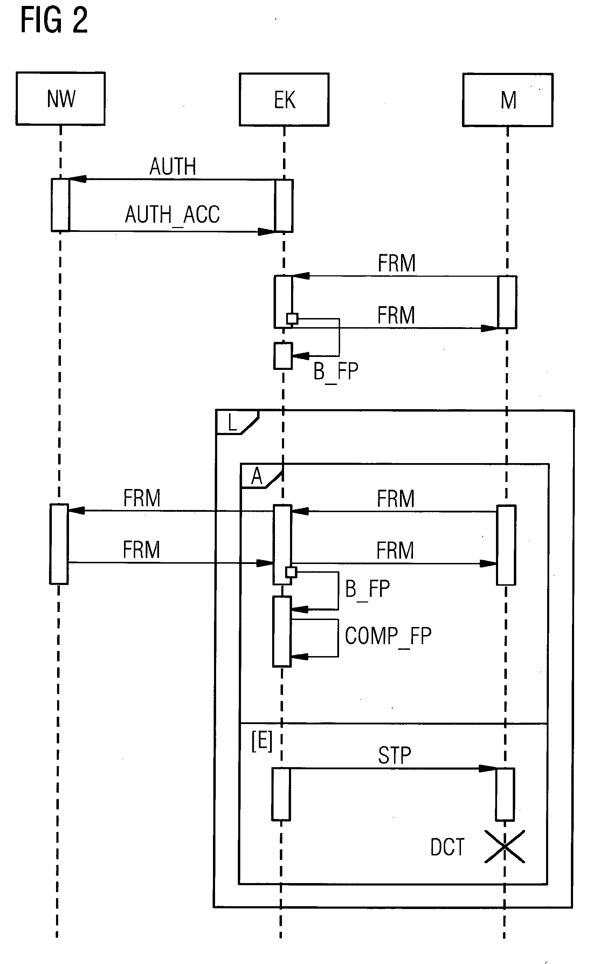

Fig. 2 zeigt den Kommunikationsablauf, nachdem für das Gerät M ein Fingerabdruck gespeichert ist. Zunächst erfolgt wiederum eine Authentifizierung des Endknotens EK gegenüber dem Automatisierungssystem NW durch den Austausch einer Authentifizierungsanfrage AUT und eine entsprechende Beantwortung durch eine Authentifizierungsantwort AUTH_ACC. Im Weiteren erfolgt nun die bereits erläuterte Kommunikation zwischen dem Gerät M und dem Endknoten EK, wobei wiederum ein Fingerabdruck erzeugt wird (B_FP). Im weiteren Verlauf kann nun eine Kommunikation zwischen dem Gerät M und dem Automatisierungssystem NW erfolgen. Dabei werden nachfolgende, mit dem Bezugszeichen L gekennzeichnete Schritte wiederholt durchgeführt, L steht hierbei für "Loop", wodurch eine regelmäßige Wiederholung der beschriebenen Schritte durchgeführt wird. Die durchgeführte Kommunikation zwischen dem Gerät M und dem Automatisierungssystem NW erfolgt über den als Gateway fungierenden Endknoten EK. Hierdurch erhält der Endknoten EK die Möglichkeit, die Kommunikationseigenschaften des Geräts M zu analysieren und seinen Fingerabdruck zu ermitteln (B_FP). Anschließend erfolgt ein Vergleich des ermittelten Fingerabdrucks mit dem in dem Speicher für das Gerät enthaltenen Fingerabdruck (COMP_FP). Hierzu wird die MAC-Adresse des Geräts M verwendet, um den zugeordneten Fingerabdruck aus dem Speicher ermitteln zu können. Ist der Vergleich positiv (vgl. Bezugszeichen A, "ALT"), so kann die Kommunikation aufrechterhalten werden. Wird bei dem Vergleich festgestellt (vgl. Bezugszeichen E, "Else"), dass der ermittelte Fingerabdruck nicht in der Datenbank des Speichers enthalten ist, so wird von dem Endknoten EK eine Nachricht STP an das Gerät M übertragen, welche diesem die Unterbrechung des Zugangs zu dem Automatisierungssystem signalisiert. Es erfolgt eine Unterbrechung der Kommunikationsverbindung zwischen dem Gerät M und dem Automatisierungssystem NW. Dies ist mit dem Bezugszeichen DCT gekennzeichnet.

Die Überprüfung des Fingerabdrucks des Geräts M und dessen Vergleich mit einem für die MAC-Adresse gespeicherten Fingerabdruck gemäß der Schleife L erfolgt vorzugsweise periodisch. Hierdurch kann auch im laufenden Betrieb eine Überprüfung der Berechtigung des Geräts M bezüglich der Kommunikation mit dem Automatisierungssystem erfolgen.

Im Rahmen der Übertragung der Nachricht STP von dem Endknoten EK an das Gerät M kann beispielsweise auch eine Alarm-Signalisierung erfolgen, so dass beispielsweise ein Administrator auf die Nichtübereinstimmung des Fingerabdrucks eines angeschlossenen Geräts M mit gespeicherten Fingerabdrücken bekannter Geräte aufmerksam gemacht wird. Eine Signalisierung kann in Form einer Email, einer Alarm-Nachricht und dergleichen erfolgen.

## Patentansprüche

1. Industrielles Automatisierungssystem, umfassend
- einen digitalen Fingerabdruck, der einer den Zugang zu dem Automatisierungssystem (NW) nachfragenden Einheit (M) zugewiesen ist und auf einem oder mehreren Parametern einer Kommunikation der Einheit (M) mit einer den Fingerabdruck ermittelnden Komponente (EK) des Automatisierungssystems (NW) basiert;
- die den Fingerabdruck ermittelnde Komponente (EK), welche im Betrieb des Automatisierungssystems (NW) der nachfragenden Einheit (M) den Zugang zu dem Automatisierungssystem (NW) gewährt und den ermittelten Fingerabdruck der nachfragenden Einheit (M) mit einem gespeicherten Fingerabdruck vergleicht.

2. Automatisierungssystem nach Anspruch 1, bei dem die den Fingerabdruck ermittelnde Komponente (EK) ein Endknoten des Automatisierungssystems NMW) ist, an den die nachfragende Einheit (M) zum Austausch von Daten über eine vorgegebene Schnittstelle, insbesondere gemäß dem Protokoll Ethernet, anschließbar ist.

3. Automatisierungssystem nach Anspruch 1 oder 2, bei dem die den Fingerabdruck ermittelnde Komponente (EK) sich für den Austausch von Daten mit anderen Komponenten des Automatisierungssystems (NW) zumindest einmalig gegenüber dem Automatisierungssystem (NW) authentifiziert.

4. Automatisierungssystem nach einem der vorhergehenden Ansprüche, bei dem die den Fingerabdruck ermittelnde Komponente (EK) drahtlos oder drahtgebunden zum Austausch von Daten mit anderen Komponenten des Automatisierungssystems (NW) verbunden ist.

5. Automatisierungssystem nach einem der vorhergehenden Ansprüche, bei dem der initial ermittelte Fingerabdruck einer der nachfragenden Einheiten (M) in der Komponente (EK) oder einem Speicher des Automatisierungssystems (NW), auf den die Komponente (EK) zugreifen kann, gespeichert ist.

6. Automatisierungssystem nach Anspruch 5, bei dem der gespeicherte Fingerabdruck einem eindeutigen Kennzeichner der nachfragenden Einheit (M), insbesondere einer MAC-Adresse, zugewiesen ist.

7. Automatisierungssystem nach einem der vorhergehenden Ansprüche, bei dem der Fingerabdruck aus einer konfigurierbaren Teilanzahl an Parametern einer Gesamtanzahl an Parametern der Kommunikation der Einheit (M) gebildet ist.

8. Verfahren zum Absichern eines industriellen Automatisierungssystems, bei dem
- einer den Zugang zu dem Automatisierungssystem (NW) nachfragenden Einheit (M) ein Fingerabdruck zugewiesen wird;
- der Fingerabdruck basierend auf einem oder mehreren Parametern einer Kommunikation der Einheit (M) mit einer den Fingerabdruck ermittelnden Komponente (EK) des Automatisierungssystems (NW) ermittelt wird;
- die den Fingerabdruck ermittelnde Komponente (EK) den ermittelten Fingerabdruck mit einem gespeicherten Fingerabdruck vergleicht und nur bei einem positiven Vergleich den Zugang zu dem Automatisierungssystem (NW) gewährt.

9. Verfahren nach Anspruch 8, bei dem die den Fingerabdruck ermittelnde Einheit (EK) zumindest nach der erstmaligen Herstellung einer Kommunikationsverbindung zu der nachfragenden Komponente (M) vorgegebene oder beliebige Daten im Rahmen einer Kommunikation mit der nachfragenden Komponente austauscht und basierend auf der Kommunikation den Fingerabdruck ermittelt und in der Komponente (EK) oder einem Speicher des Automatisierungssystems (NW), auf den die Komponente (EK) zugreifen kann, speichert.

10. Verfahren nach Anspruch 9 oder 10, bei dem nach der Herstellung einer Kommunikationsverbindung der nachfragenden Komponente (M) zu der den Fingerabdruck ermittelnden Einheit (EK) der Fingerabdruck der Komponente (M) ermittelt wird und überprüft wird, ob dieser gespeichert ist, wobei im negativen Fall überprüft wird, ob an einer Mensch-Maschine-Schnittstelle eine positive Bestätigung des ermittelten Fingerabdrucks ermittelt werden kann, und nur bei vorliegender positiver Bestätigung ein Speichern des Fingerabdrucks sowie die Gewährung des Zugangs zu dem Automatisierungssystem (NW) erfolgt.

11. Verfahren nach einem der Ansprüche 8 bis 10, bei dem die Ermittlung des Fingerabdrucks der an die Einheit (EK) angeschlossenen Komponenten (M) und der Vergleich mit dem für die Komponente (M) gespeicherten Fingerabdruck in vorgegebenen zeitlichen Abständen und/oder bei Vorliegen bestimmter Ereignisse durch die Einheit (EK) erfolgt.

12. Verfahren nach einem der Ansprüche 8 bis 11, bei dem zur Ermittlung des Fingerabdrucks eine Gesamtanzahl an Parametern ermittelt wird, wobei der Fingerabdruck aus einer konfigurierbaren Teilanzahl an Parametern der Gesamtanzahl an Parametern der Kommunikation der Einheit (M) gebildet wird.

13. Verfahren nach Anspruch 12, bei dem die Gesamtanzahl an Parametern folgendes umfasst:
- ein von der Komponente (M) für die Kommunikation mit der Einheit (EK) verwendetes Protokoll;
- die von der Komponente (M) für die Kommunikation verwendeten Ports der Einheit (EK);
- die von der Komponente (M) im Rahmen der Kommunikation angefragten Adressen;
- die Länge der von der Komponente (M) erzeugten Datenrahmen;
- eine Zeitdauer zwischen dem aufeinander folgenden Senden zweier Datenrahmen;
- eine MAC-Adresse der Komponente.

14. Verfahren nach einem der Ansprüche 8 bis 13, bei dem die den Fingerabdruck ermittelnde Komponente (EK) sich für den Austausch von Daten mit anderen Komponenten des Automatisierungssystems (NW) zumindest einmalig gegenüber dem Automatisierungssystem (NW) authentifiziert.

## Claims

1. Industrial automation system, comprising
- a digital fingerprint which is allocated to a unit (M) requesting access to the automation system (NW) and is based on one or more parameters of a communication between the unit (M) and a fingerprint-determining component (EK) of the automation system (NW);
- the fingerprint-determining component (EK), which, during the operation of the automation system (NW), grants the requesting unit (M) access to the automation system (NW) and compares the determined fingerprint of the requesting unit (M) with a stored fingerprint.

2. Automation system according to Claim 1, wherein the fingerprint-determining component (EK) is an end node of the automation system (NW), to which end node the requesting unit (M) is connectable for exchanging data via a predetermined interface, in particular in accordance with the Ethernet protocol.

3. Automation system according to Claim 1 or 2, wherein the fingerprint-determining component (EK) authenticates itself relative to the automation system (NW) at least once for the exchange of data with other components of the automation system (NW).

4. Automation system according to any of the preceding claims, wherein the fingerprint-determining component (EK) is connected to other components of the automation system (NW) in a wireless or wired manner for exchanging data.

5. Automation system according to any of the preceding claims, wherein the initially determined fingerprint of one of the requesting units (M) is stored in the component (EK) or a memory of the automation system (NW) that can be accessed by the component (EK).

6. Automation system according to Claim 5, wherein the stored fingerprint is allocated to a unique identifier of the requesting unit (M), in particular a MAC address.

7. Automation system according to any of the preceding claims, wherein the fingerprint is formed from a configurable partial number of parameters of a total number of parameters of the communication of the unit (M).

8. Method for safeguarding an industrial automation system, wherein
- a fingerprint is allocated to a unit (M) requesting access to the automation system (NW);
- the fingerprint is determined on the basis of one or more parameters of a communication between the unit (M) and a fingerprint-determining component (EK) of the automation system (NW);
- the fingerprint-determining component (EK) compares the determined fingerprint with a stored fingerprint and grants access to the automation system (NW) only in the case of a positive comparison.

9. Method according to Claim 8, wherein the fingerprint-determining unit (EK), at least after the first establishment of a communication connection to the requesting component (M), exchanges predefined or arbitrary data in the context of a communication with the requesting component and determines the fingerprint on the basis of the communication and stores said fingerprint in the component (EK) or a memory of the automation system (NW) that can be accessed by the component (EK).

10. Method according to Claim 8 or 9, wherein, after the establishment of a communication connection of the requesting component (M) to the fingerprint-determining unit (EK), the fingerprint of the component (M) is determined and a check is made to ascertain whether said fingerprint is stored, wherein in the negative case a check is made to ascertain whether a positive confirmation of the fingerprint determined can be determined at a human-machine interface, and it is only when positive confirmation is present that the fingerprint is stored and access to the automation system (NW) is granted.

11. Method according to any of Claims 8 to 10, wherein the determination of the fingerprint of the components (M) connected to the unit (EK) and the comparison with the fingerprint stored for the component (M) are effected by the unit (EK) at predefined time intervals and/or when specific events are present.

12. Method according to any of Claims 8 to 11, wherein a total number of parameters are determined for determining the fingerprint, wherein the fingerprint is formed from a configurable partial number of parameters of the total number of parameters of the communication of the unit (M).

13. Method according to Claim 12, wherein the total number of parameters comprises the following:
- a protocol used by the component (M) for the communication with the unit (EK);
- the ports of the unit (EK) that are used by the component (M) for the communication;
- the addresses queried by the component (M) in the context of the communication;
- the length of the data frames produced by the component (M) ;
- a time duration between the successive transmission of two data frames;
- a MAC address of the component.

14. Method according to any of Claims 8 to 13, wherein the fingerprint-determining component (EK) authenticates itself relative to the automation system (NW) at least once for the exchange of data with other components of the automation system (NW).

## Revendications

1. Système d'automatisation industriel comprenant
- une empreinte digitale numérique, qui est associée à une unité ( M ) demandant l'accès au système ( NW ) d'automatisation et qui repose sur un paramètre ou sur plusieurs paramètres d'une communication de l'unité ( M ) avec un composant ( EK ), déterminant l'empreinte digitale, du système ( NW ) d'automatisation
- le composant ( EK ), qui détermine l'empreinte digitale, qui, lorsque le système ( NW ) d'automatisation fonctionne, assure à l'unité ( M ) demandeuse l'accès au système d'automatisation et qui compare l'empreinte digitale déterminée de l'unité ( M ) demandeuse à une empreinte digitale mémorisée.

2. Système d'automatisation suivant la revendication 1, dans lequel le composant ( EK ) déterminant l'empreinte digitale est un nceud d'extrémité du système ( NW ) d'automatisation, auquel l'unité ( M ) demandeuse peut être raccordée pour échange des données par l'intermédiaire d'une interface donnée à l'avance, notamment suivant le protocole ethernet.

3. Système d'automatisation suivant la revendication 1 ou 2, dans lequel le composant ( EK ) déterminant l'empreinte digitale s'authentifie au moins une fois par rapport au système ( NW ) d'automatisation pour l'échange de données avec d'autres composants du système ( NW ) d'automatisation.

4. Système d'automatisation suivant l'une des revendications précédentes, dans lequel le composant ( EK ) déterminant l'empreinte digitale est relié sans fil ou avec fil pour l'échange de données avec d'autres composants du système ( NW ) d'automatisation.

5. Système d'automatisation suivant l'une des revendications précédentes, dans lequel l'empreinte digitale déterminée initialement de l'une des unités ( M ) demandeuses est mémorisée dans le composant ( EK ) ou dans une mémoire du système ( NW ) d'automatisation à laquelle le composant ( EK ) peut accéder.

6. Système d'automatisation suivant la revendication 5, dans lequel l'empreinte digitale mémorisée est affectée à un identifiant univoque de l'unité ( M ) demandeuse, notamment à une adresse MAC.

7. Système d'automatisation suivant l'une des revendications précédentes, dans lequel l'empreinte digitale est formée d'un nombre partiel et configurable de paramètres parmi un nombre total de paramètres de la communication de l'unité ( M ).

8. Procédé de sécurisation d'un système d'automatisation industriel, dans lequel
- on affecte une empreinte digitale à une unité ( M ) demandant l'accès au système ( NW ) d'automatisation,
- on détermine l'empreinte digitale reposant sur un paramètre ou sur plusieurs paramètres d'une communication de l'unité ( M ) avec un composant ( EK ), déterminant l'empreinte digitale, du système ( NW ) d'automatisation
- le composant ( EK ) déterminant l'empreinte digitale compare l'empreinte digitale déterminée à une empreinte digitale mémorisée, et n'assure l'accès au système ( NW ) d'automatisation que si la comparaison est positive.

9. Procédé suivant la revendication 8, dans lequel l'unité ( EK ) déterminant l'empreinte digitale échange, au moins après que pour la première fois une liaison de communication a été ménagée avec le composant ( M ) demandeur, des données prescrites ou quelconques dans le cadre d'une communication avec le composant demandeur et, sur la base de la communication, détermine l'empreinte digitale et la mémorise dans le composant ( EK ) ou dans une mémoire du système ( NW ) d'automatisation à laquelle le composant ( EK ) peut avoir accès.

10. Procédé suivant la revendication 8 ou 9, dans lequel, après qu'une liaison de communication du composé ( M ) demandeur avec l'unité ( EK ) déterminant l'empreinte digitale a été ménagée, l'empreinte digitale du composant ( M ) est déterminée et contrôlée sur le point de savoir si elle est mémorisée en contrôlant dans le cas négatif si on peut déterminer, sur une interface homme-machine, une confirmation positive de l'empreinte digitale déterminée et ce n'est qu'une présence d'une confirmation positive qu'une mémorisation de l'empreinte digitale est effectuée ainsi que l'accès au système ( NW ) d'automatisation est donnée.

11. Procédé suivant l'une des revendications 8 à 10, dans lequel la détermination de l'empreinte digitale du composant ( M ) raccordé à l'unité ( EK ) et la comparaison avec l'empreinte digitale mémorisée pour le composant ( M ) s'effectue par l'unité ( EK ) à des intervalles de temps donnés à l'avance et/ou en présence d'évènements définis.

12. Procédé suivant l'une des revendication 8 à 11, dans lequel pour la détermination de l'empreinte digitale on détermine un nombre total de paramètres, l'empreinte digitale étant formée d'un nombre partiel et configurable de paramètres parmi le nombre total de paramètres de la communication de l'unité ( M ).

13. Procédé suivant la revendication 12, dans lequel le nombre total de paramètres comprend ce qui suait :
- un protocole utilisé par le composant ( M ) pour la communication avec l'unité ( EK ),
- les accès de l'unité ( EK ) utilisés par le composant ( M ) pour la communication,
- les adresses demandées par le composant ( M ) dans le cadre de la communication,
- la longueur des trames de données produites par le composant ( M ),
- une durée entre l'envoi successif de deux trames de données,
- une adresse MAC du composant.

14. Procédé suivant l'une des revendications 8 à 13, dans lequel le composant ( EK ) déterminant l'empreinte digitale s'authentifie au moins une fois par rapport au système ( NW ) d'automatisation pour l'échange de données avec d'autres composants du système ( NW ) d'automatisation.
